# EUROPEAN PATENT SPECIFICATION

(11) **EP 1 724 083 B1**
(45) Date of publication and mention of the grant of the patent: **14.12.2016**
(21) Application number: 05720313.5
(22) Date of filing: 09.03.2005
(51) Int. Cl.: B29C 33/30, B29C 45/17

(54) **MOLDING MACHINE AND MOLDING METHOD**
SPRITZGIESSMASCHINE UND SPRITZGIESSVERFAHREN
MACHINE ET MÉTHODE DE MOULAGE

(30) Priority: 09.03.2004 JP 2004065595
(43) Date of publication of application: 22.11.2006
(73) Proprietor: SUMITOMO HEAVY INDUSTRIES, LTD., Shinagawa-ku, Tokyo 141-8686 (JP)
(72) Inventor: NAGATA, Yoshihiko, Sumitomo Heavy Industries Ltd., Chiba-shi, Chiba 2630001 (JP); KOBAYASHI, Akihisa, Sumitomo Heavy Industries Ltd., Chiba-shi, Chiba 2630001 (JP)
(74) Representative: Wagner, Karl H.
(86) International application number: PCT/JP2005/004041
(87) International publication number: WO 2005/084909

(56) References cited:
- EP-A- 1 287 962
- WO-A1-98/41380
- WO-A1-03/084731
- DE-A1- 10 236 724
- JP-A- 9 038 984
- US-A- 5 123 834
- US-A- 5 776 402
- US-A1- 2003 049 347
- US-B2- 6 776 605

## Description

### TECHNICAL FIELD

The present invention relates to a mold-supporting apparatus, a molding machine, and a molding method.

### BACKGROUND ART

Conventionally, in a molding machine such as an injection molding machine, resin heated and melted in a heating cylinder is injected under high pressure by means of advancing a screw within the heating cylinder, and is charged into a cavity of a mold apparatus. The molten resin is then cooled and solidified within the cavity so as to obtain a molded product.

For such molding, the molding apparatus is composed of a stationary mold and a movable mold, and the movable mold is advanced and retreated by means of a mold-clamping apparatus so as to come into contact with and separate from the stationary mold, to thereby perform mold open-close operation; i.e., mold closing, mold clamping, and mold opening. The mold-clamping apparatus typically includes a stationary platen for holding the stationary mold, a movable platen for holding the movable mold, and a toggle mechanism serving as an open-close apparatus for advancing and retreating the movable platen. The toggle mechanism is operated through drive of an electric motor, servomotor, or the like disposed in a drive section.

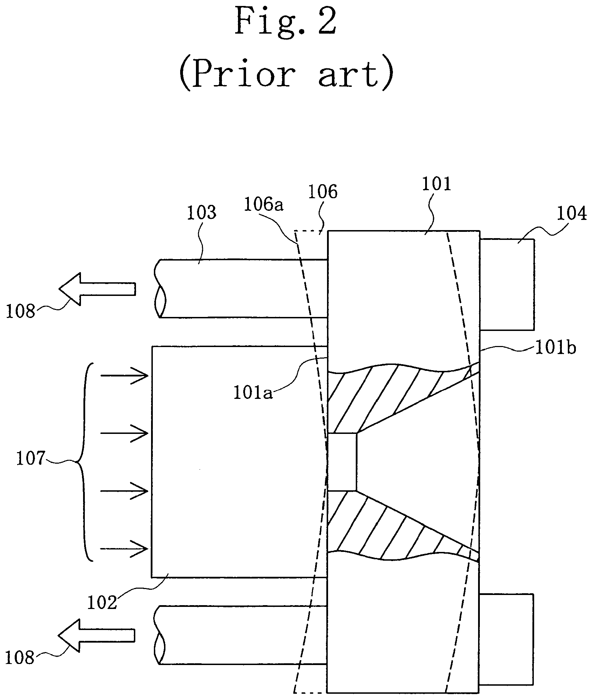

FIG. 2 is a side view of a conventional stationary platen.

In this drawing, reference numeral 101 denotes a stationary platen, and a stationary mold 102 is mounted to a mold-mounting surface 101a which faces an unillustrated movable platen. Reference numeral 103 denotes a plurality of (e.g., four) tie bars disposed to extend between the stationary platen 101 and an unillustrated toggle support. Their end portions are secured to the back surface 101b of the stationary platen 101 by means of fixing members 104 such as nuts. The movable platen is disposed such that it can advance and retreat (move in the left-right direction in FIG. 2) along the tie bars 103. Notably, an unillustrated movable mold is mounted to a mold-mounting surface of the movable platen, which surface faces the stationary platen 101.

When the movable platen is moved toward the stationary platen 101 by means of the unillustrated toggle mechanism, the movable mold is pressed against the stationary mold 102, whereby mold closing and mold clamping are performed. In this case, the stationary mold 102 receives a strong mold-clamping force 107 from the toggle mechanism via the movable platen and the movable mold. Since the mold-clamping force 107 is transmitted to the stationary platen 101, in some cases, the stationary platen 101 gives, and the mold-mounting surface 101a deforms.

As shown in FIG. 2, each of the tie bars 103 is fixed to the back surface 101b of the stationary platen 101 on the upper or lower side of the stationary mold 102. The stationary platen 101 receives, via the tie bars 103, a reaction force 108, which is opposite in direction and equal in magnitude to the mold-clamping force 107. Therefore, when the stationary platen 101 receives the strong mold-clamping force 107 from the toggle mechanism, a bending moment acts on the stationary platen 101, so that the stationary platen 101 deflects and deforms as indicated by 106. As a result, the mold-mounting surface 101a also deforms as indicated by 106a. Notably, for facilitating understanding, the deformed stationary platen 106 and the deformed mold-mounting surface 106a are shown in an exaggerated manner in FIG. 2.

If the mold-mounting surface 101a deforms as indicated by 106a, the stationary mold 102 also deforms, so that burrs are produced on molded products or their wall thicknesses become uneven, and thus, moldability of molded products deteriorates. In view of this, in order to prevent deflection of the stationary platen 101 and deformation of the mold-mounting surface 101a, the rigidity of the stationary platen 101 is increased by means of increasing the thickness of the stationary platen 101. However, when the thickness of the stationary platen 101 is increased, production cost of the stationary platen 101 increases, and the weight of the stationary platen 101 also increases, so that the overall strength of the molding machine must be increased, which results in an increase in the overall production cost of the molding machine.

In order to solve the above-described drawback, there has been proposed a technique in which a stationary platen is composed of two wall portions separated from each other, and the wall portions are joined via an intermediate support structure (see, for example, JP-A-09-38984). In this case, since the intermediate support structure supports only a central region of the wall portion having a mold-mounting surface, no bending moment acts on the wall portion having the mold-mounting surface.

However, in the conventional stationary platen having an intermediate support structure, only a central region of the wall portion having a mold-mounting surface is supported. Therefore, in the case where a mold apparatus is large so that the mounting surface of its stationary mold extends to a region outside the central region, and the cavity is disposed outside the connection portion between the mold-mounting surface side and the intermediate support structure, the wall portion having the mold-mounting surface receives a mold-clamping force in the region outside the central region as well. In this case, since the region outside the central region is not supported by means of the intermediate support structure, that wall portion deforms because of the mold-clamping force. As a result, a non-uniform surface pressure is generated between the mold-mounting surface of the stationary platen and a contact surface of the stationary mold through which the stationary mold comes into contact with the stationary platen, and the cavity warps outward, so that defective molded products are produced.

Further, in general, the stationary platen is produced by means of casting. Since the conventional stationary platen is complicated in structure for connecting the two separated wall portions by means of an intermediate support structure, casting molds for such a stationary platen are difficult to manufacture. Therefore, when the stationary platen is produced by means of casting, production cost increases.

US-A-5,776,402 discloses an injection molding machine which includes a stationary platen having a first mold half, at least one movable platen having a second mold half for forming a mold with the first mold half, tie bars for guiding the movable platen relative the stationary platen, and an injection unit for injecting molten resin into the mold. For at least one of the stationary and movable platen, a force is generated during clamping having a first direction. The at least one stationary and movable platens includes a first wall having edges and a central area and at least first and second sides, wherein the first side is adapted to be positioned nearest the clamping operation. The platen further includes a second wall spaced from and substantially parallel to the first wall, wherein the first and second walls extend substantially transverse to the first direction of the force. An intermediate support structure is positioned between the walls and is used to direct the force from the edges of the first wall toward the central area of the first wall for substantially preventing non-uniform deflection of the first wall along the first side. A related process for preventing flash formation is also disclosed.

DE 102 36 724 A1 discloses a tensioning plate for an injection molding machine, consisting of a rectangular base plate with a central circular hole. The base plate thickness is less than 1/3 of the total plate thickness, and each of the four corners has a guide hole. The plate has an inner, circular reinforcing structure and radial reinforcing wedges between the inner ring and the outer structure. The base plate has an outer circular or oval reinforcing structure which forms a smooth transition between the four guide holes.

EP 1 287 962 A1 discloses a platen of an injection molding machine. Front and rear areas of the platen are connected by sidewalls and ribs with cut-outs extending into the region of the bores through which the machine tie-bars pass. US 2003/049347 A1 discloses a mold mounting plate of an injection molding machine, in particular for plastic, according to the preamble of claim 1, which includes a baseplate having a front face for receiving a mold. The weight of the mold mounting plate can be reduced by arranging a dome-shaped element with its base on the backside of the baseplate opposite the front side for supporting the baseplate. Such mold mounting plate is easy to manufacture as a single cast part. US 5,123,834 A discloses a movable platen structure for an injection molding machine in which the platen is in the form of a box-like structure that includes spaced front and rear plates. The platen structure includes a plurality of longitudinally extending beam members that interconnect the front and rear plates and are positioned in parallel relationship and in a generally rectangular array. The rear plate includes on its rear face a plurality of vertically extending pillow block members for pivotally carrying a pivot pin, the pillow block members having inclined sides that intersect with the rear face of the rear plate. Extending across the front face of the rear plate and opposite from the ends of the respective pillow blocks are an upper and a lower transverse beam member, each of which is formed integrally with the rear plate to provide additional structural stiffening and thereby permit the rear plate to be of a thinner and lighter structure.

An object of the present invention is to solve the above-mentioned problems in the conventional technique and to provide a molding machine including a mold-supporting apparatus whose mold-mounting surface does not deform, irrespective of whether a mold is large or small, so that a uniform surface pressure is produced, and which can be readily produced by means of casting. The present invention also provides a molding method which uses the molding machine.

### MEANS FOR SOLVING THE PROBLEMS

To achieve the above object, a molding machine is provided as set forth in claim 1. Preferred embodiments of the present invention may be gathered from the dependent claims. Moreover, a molding method of the present invention is provided as set forth in claim 7.

### EFFECT OF THE PRESENT INVENTION

According to the invention, the mold-supporting apparatus can suppress deformation of the mold-mounting surface, irrespective of whether a mold is large or small, to thereby improve the quality of molded products.

### BRIEF DESCRIPTION OF THE DRAWINGS

FIG. 1 is a first perspective view of a stationary platen according to an embodiment of the present invention, as viewed from a mold-mounting surface side.
FIG. 2 is a side view of a conventional stationary platen.
FIG. 3 is a second perspective view of the stationary platen according to the embodiment of the present invention, as viewed from the mold-mounting surface side.
FIG. 4 is a front view of the stationary platen according to the embodiment of the present invention.
FIG. 5 is a perspective view of the stationary platen according to the embodiment of the present invention, as viewed from the rear surface side.
FIG. 6 is a rear view of the stationary platen according to the embodiment of the present invention.
FIG. 7 is a vertical sectional view of the stationary platen according to the embodiment of the present invention, taken along line B-B of FIG. 6.
FIG. 8 is a perspective view of a vertically-cut cut model of the stationary platen according to the embodiment of the present invention.
FIG. 9 is a first perspective view of a transversely-cut cut model of the stationary platen according to the embodiment of the present invention, taken along line A-A of FIG. 1.
FIG. 10 is a second perspective view of the transversely-cut cut model of the stationary platen according to the embodiment of the present invention.
FIG. 11 is a front view of the transversely-cut cut model of the stationary platen according to the embodiment of the present invention.
FIG. 12 is a side sectional view of the stationary platen according to the embodiment of the present invention, showing a state in which the stationary platen is mounted to a molding machine.
FIG. 13 is a vertical sectional view of a casting mold for casting the stationary platen according to the embodiment of the present invention.
FIG. 14 is a transverse sectional view of the casting mold for casting the stationary platen according to the embodiment of the present invention, taken along line C-C in FIG. 13.

### BEST MODE FOR CARRYING OUT THE INVENTION

An embodiment of the present invention will next be described in detail with reference to the drawings. Although the present invention can be applied to a molding machine of any type, a case in which the present invention is applied to an injection molding machine will be described here.

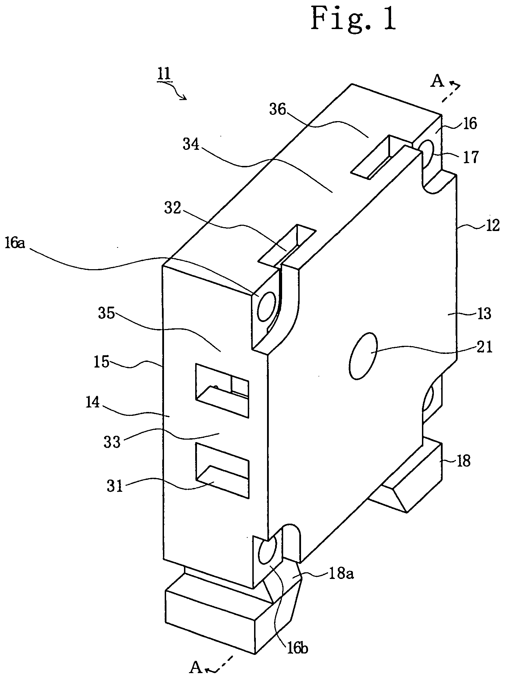

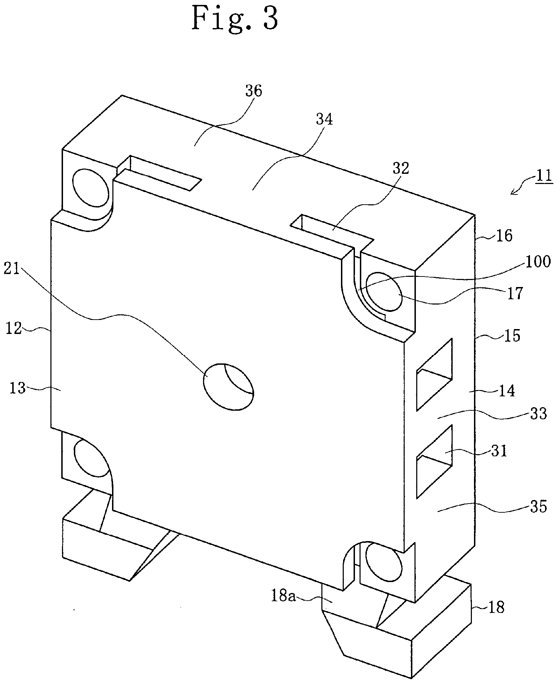

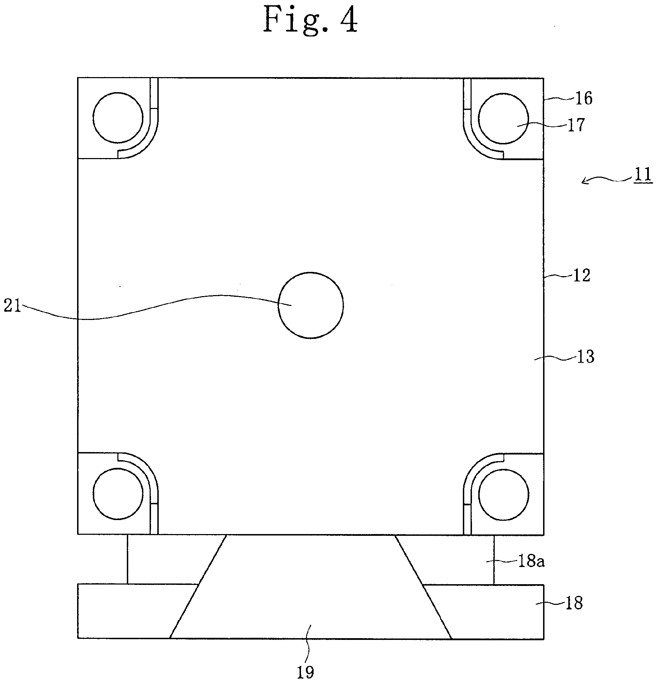

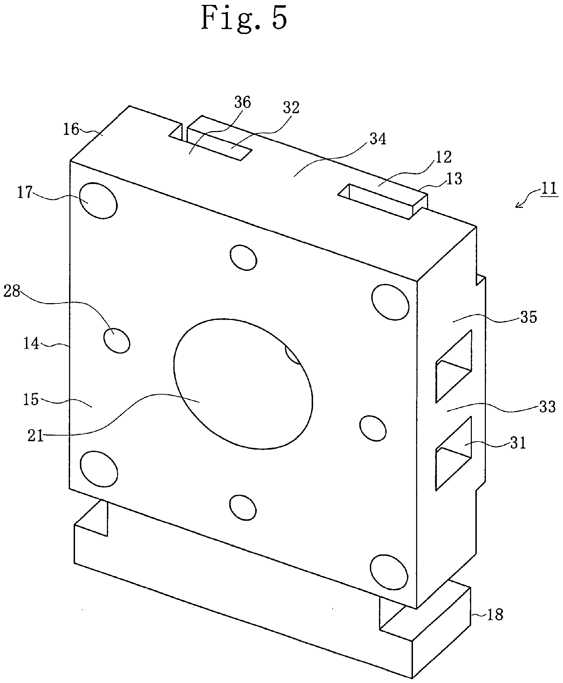

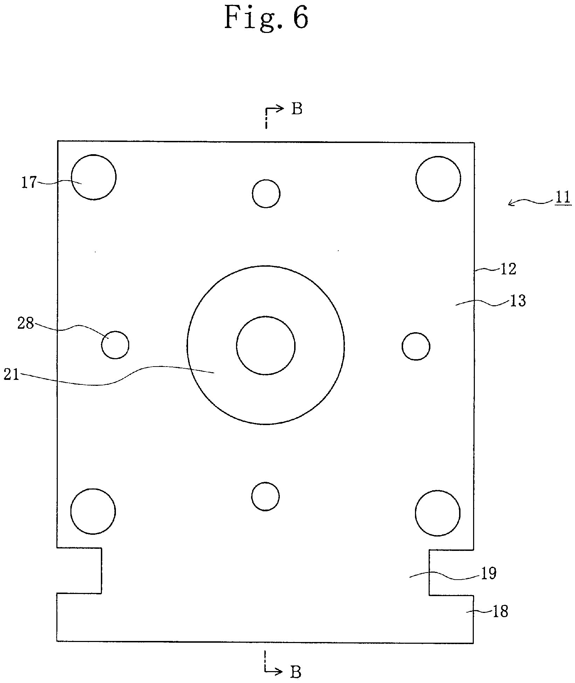

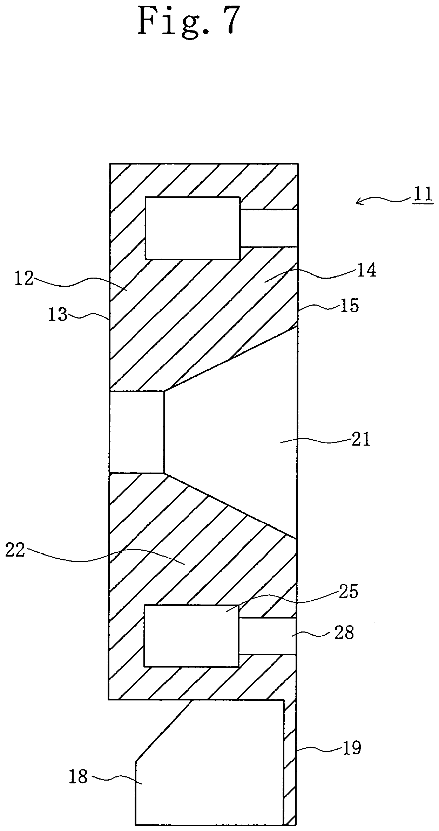

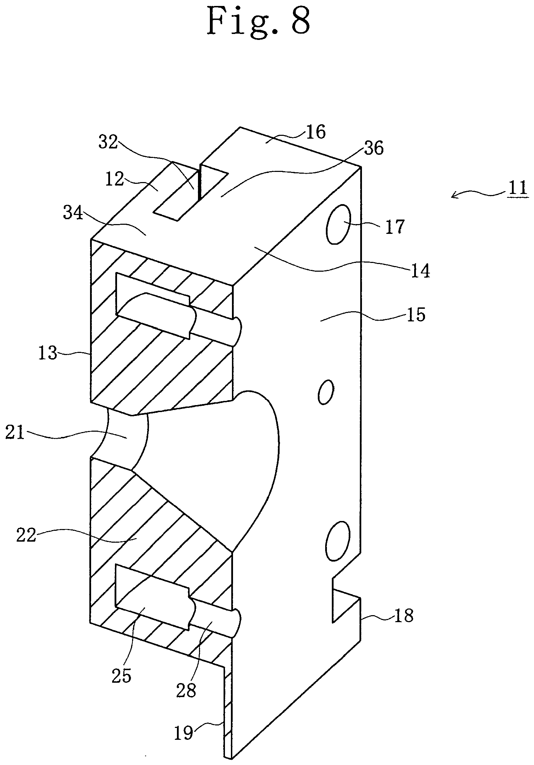

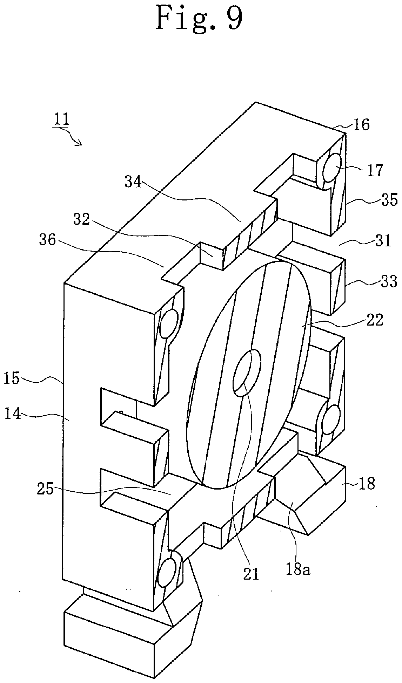

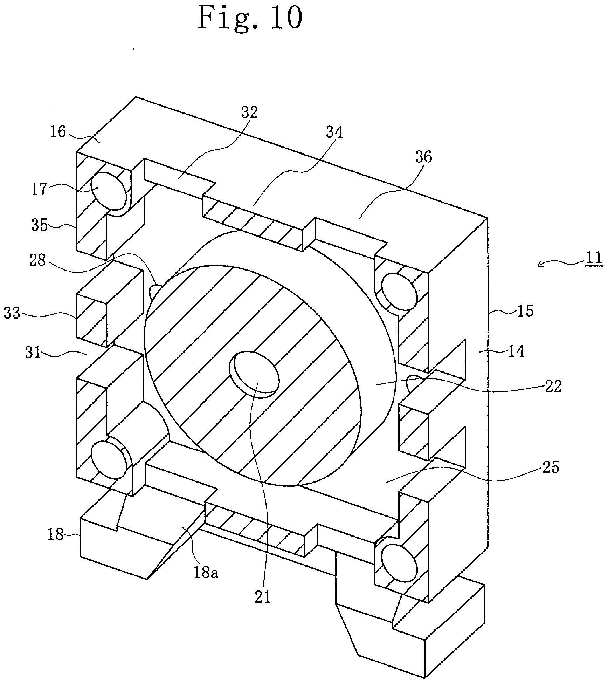

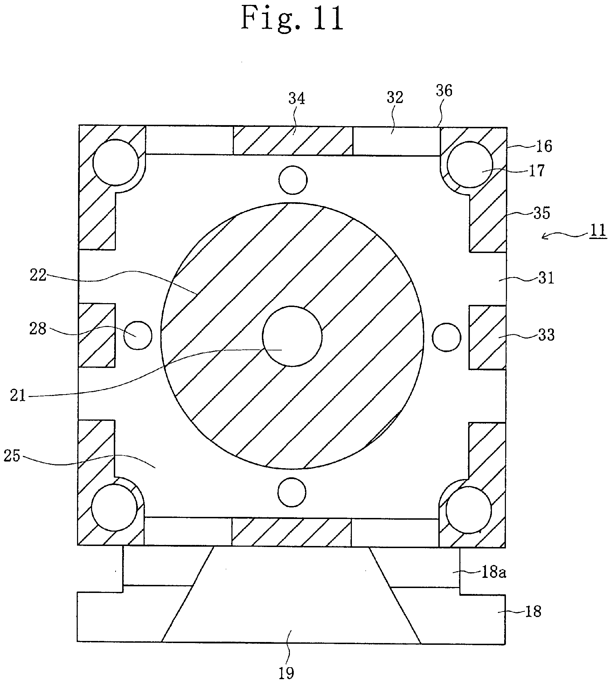

FIG. 1 is a first perspective view of a stationary platen according to an embodiment of the present invention, as viewed from a mold-mounting surface side; FIG. 3 is a second perspective view of the stationary platen according to the embodiment of the present invention, as viewed from the mold-mounting surface side; FIG. 4 is a front view of the stationary platen according to the embodiment of the present invention; FIG. 5 is a perspective view of the stationary platen according to the embodiment of the present invention, as viewed from the rear surface side; FIG. 6 is a rear view of the stationary platen according to the embodiment of the present invention; FIG. 7 is a vertical sectional view of the stationary platen according to the embodiment of the present invention, taken along line B-B of FIG. 6; FIG. 8 is a perspective view of a vertically-cut cut model of the stationary platen according to the embodiment of the present invention; FIG. 9 is a first perspective view of a transversely-cut cut model of the stationary platen according to the embodiment of the present invention, taken along line A-A of FIG. 1; FIG. 10 is a second perspective view of the transversely-cut cut model of the stationary platen according to the embodiment of the present invention; and FIG. 11 is a front view of the transversely-cut cut model of the stationary platen according to the embodiment of the present invention.

In these drawings, reference numeral 11 denotes a stationary platen (mold-supporting apparatus) which is used in an unillustrated injection molding machine and to which a mold apparatus is mounted. In the injection molding machine, resin heated and melted in an unillustrated heating cylinder is injected under high pressure by means of advancing a screw within the heating cylinder, and is charged into a cavity of the mold apparatus. The molten resin is then cooled and solidified within the cavity so as to obtain a molded product. The molding apparatus is composed of a movable mold and a stationary mold 41, which will be described later. The movable mold is advanced and retreated by means of an unillustrated mold-clamping apparatus so as to come into contact with and separate from the stationary mold 41, to thereby perform mold open-close operation; i.e., mold closing, mold clamping, and mold opening. The mold-clamping apparatus includes the stationary platen 11 for holding the stationary mold 41, and an unillustrated movable platen for holding the movable mold. A toggle mechanism is provided as an open-close apparatus for advancing and retreating the movable platen. The toggle mechanism is operated through drive of an electric motor, servomotor, or the like disposed in a drive section. Notably, the open-close apparatus may be another type of apparatus, other than the toggle mechanism; for example, a hydraulic cylinder apparatus or the like.

When the movable platen is moved toward the stationary platen 11 by means of the toggle mechanism, the movable mold is pressed against the stationary mold 41, whereby mold closing and mold clamping are performed. In this case, the stationary mold 41 receives a strong mold-clamping force from the toggle mechanism via the movable platen and the movable mold. The mold-clamping force is transmitted to the stationary platen 11.

The stationary platen 11 is a hollow box-shaped member integrally formed through casting. Notably, for facilitating the description, the description will be performed while names and reference numerals are given to various portions of the box-shaped member; however, it is to be noted that these portions are not separate members, and are integrally formed portions of the box-shaped member.

The stationary platen 11 includes a mold-mounting portion 12 having a mold-mounting surface 13 to which the stationary mold 41 is mounted, and a rear surface portion 14 having a rear surface 15 opposite the mold-mounting surface 13. In this case, the mold-mounting surface 13 faces the unillustrated movable platen; i.e., faces the front side, and the rear surface 15 faces an unillustrated heating cylinder. A plurality of (e.g., four) tie-bar-load-receiving sections 16 are provided on the rear surface portion 14 at positions corresponding to a plurality of tie bars 42 to be described later. Tie bar insertion holes 17 into which the tie bars 42 are inserted are formed in the tie-bar-load-receiving sections 16. The tie bars 42 function as a reaction force applying member for applying to the stationary platen 11 a reaction force of the mold-clamping force. The tie-bar-load-receiving sections 16 serve as reaction force receiving portions for receiving reaction force from the tie bars 42. Notably, as shown in FIGS. 1 and 3, the surfaces of the tie-bar-load-receiving sections 16 located on the same side as the mold-mounting surface 13 are recessed from the mold-mounting surface 13 toward the rear surface 15.

The rear surface portion 14 has a generally rectangular shape. A nozzle-receiving hole 21 is formed in the rear surface portion 14, and an injection nozzle attached to a distal end portion of the heating cylinder enters the nozzle-receiving hole 21. As shown in FIGS. 7 and 8, the nozzle-receiving hole 21 is tapered such that its diameter gradually decreases from the rear surface 15 toward the mold-mounting surface 13. Therefore, the diameter of the nozzle-receiving hole 21 at the rear surface 15 is greater than the diameter at the mold-mounting surface 13. Further, at the left and right lower corners of the rear surface portion 14, mounting portions 18 are attached to the rear surface portion 14 via attachment leg members 18a, which project downward from the rear surface portion 14 at locations inside the tie bars 42. Accordingly, even when the tie bars 42 deform as a result of generation of a mold-clamping force, and the tie-bar-load-receiving sections 16, to which the tie bars 42 are secured by means of nuts, deform, the deformation of the upper tie-bar-load-receiving sections 16a can be made equal to that of the lower tie-bar-load-receiving sections 16b, whereby imbalance in deformation between and upper and lower portions of the stationary platen 11 can be eliminated.

The mounting portions 18 are members for attaching the stationary platen 11 onto the upper surface of a stationary frame of the mold-clamping apparatus. The mounting portions 18 are secured to a stationary base, a stationary frame, or the like by means of unillustrated fixing members such as bolts. Fixing positions at which the mounting portions 18 are fixed by means of the fixing members are located outside the tie bars 42. By virtue of this configuration, the mounting portions 18 can be secured, by means of engagement members such as bolts, to an unillustrated stationary-frame reinforcement member, which is attached to the stationary frame so as to increase the rigidity of the stationary frame. Therefore, provision of a separate member on the stationary frame for the stationary platen is not required. Notably, the mounting portions 18 are connected together via a connection plate 19 attached to the left and right lower ends of the rear surface portion 14.

The mold-mounting portion 12 assumes a generally rectangular shape, and the above-described nozzle-receiving hole 21 is formed at the center. In general, a plurality of bolt holes for attaching the stationary mold 41 are formed on the mold-mounting surface 13 of the mold-mounting portion 12. However, they are omitted in the present embodiment.

A cavity portion 25 is formed in the stationary platen 11, with a central portion of the stationary platen 11 being left. The remaining central portion serves as a central connection member 22 for connecting the mold-mounting portion 12 and the rear surface portion 14. As shown in FIGS. 9 to 11, the central connection member 22 assumes a generally cylindrical columnar shape and has an outer circumference which is straight or symmetric with respect to the advancement/retreat direction of the movable mold. Since the above-described nozzle-receiving hole 21 is formed in the central connection member 22, it can be said to assume the form of a cylindrical tube having a tapered inner wall surface. As shown in FIGS. 7 to 11, the annular cavity portion 25 is formed between the mold-mounting portion 12 and the rear surface portion 14 to surround the central connection member 22. Notably, the inner peripheral surface of the cavity portion 25 is a cylindrical tubular surface, and the outer peripheral surface of the cavity portion 25 is a generally rectangular tubular surface.

The cross sectional shape of the central connection member 22 is not limited to a generally circular shape, and may be changed to a generally elliptical shape, a generally rhombic shape, or any other arbitrary shape depending on the shape of the stationary mold 41 to be attached to the mold-mounting surface 13. For example, in the case where the attachment surface of the stationary mold 41 has a vertically elongated shape, the central connection member 22 is desirably formed such that its cross section assumes a generally elliptical or rhombic shape that is elongated vertically. The central connection member 22 is a member for connecting the rear surface portion 14 and a portion of the mold-mounting portion 12 where deformation is small. When the shape of the attachment surface of the stationary mold 41 changes, the shape of the portion of the mold-mounting portion 12 where deformation is small also changes. In this case, the cress sectional shape of the central connection member 22 is desirably changed in accordance with the change in the shape of the attachment surface. For example, in the case where a laterally elongated mold is used as in the case of a two-material molding machine, the central connection member 22 is desired to have a generally elliptical cross section that is elongated laterally or horizontally.

The mold-clamping force received by the mold-mounting portion 12 via the stationary mold 41 is transmitted to a central region of the rear surface portion 14 via the central connection member 22. Meanwhile, the reaction force received by the tie-bar-load-receiving sections 16 from the tie bars is transmitted to a central region of the mold-mounting portion 12 via the rear surface portion 14 and the central connection member 22. Accordingly, the dimensions (e.g., wall thickness in the radial direction) of the central connection member 22 are determined such that the central connection member 22 has a strength sufficient to transmit the mold-clamping force and the reaction force. Further, since the cavity portion 25 is formed in the stationary platen 11 with the central portion of the stationary platen 11 being left, the mold-mounting portion 12 is separated from the rear surface portion 14 in a region outside the central portion of the stationary platen 11. Therefore, even when an outer peripheral portion of the rear surface portion 14 and the tie-bar-load receiving sections 16 deform due to the reaction force which the tie-bar-load-receiving sections 16 receive from the tie bars 42, that deformation is not transmitted to the mold-mounting portion 12, so that the mold-mounting portion 12 does not deform. Accordingly, the surface pressure between the mold-mounting surface 13 and the contact surface of the stationary mold 41 through which the rear surface portion 14 comes into contact with the stationary platen 11 does not become non-uniform. In the present invention, the central connection member 22 is composed of a single member; however, the central region of the mold-mounting portion 12 and the central region of the rear surface portion 14 may be connected together by use of a plurality of members.

Further, the cavity portion 25 communicates with the outside via openings 100 extending obliquely. A step is formed between the mold-mounting surface 13 and the side surfaces of the tie-bar-load-receiving sections 16 on the mold mounting side. The obliquely extending openings 100 completely separate the tie-bar-load-receiving sections 16 from the mold-mounting portion 12, so that even when a molding clamping force acts on the tie bars 42 and the tie-bar-load-receiving sections 16 deform, deformation of the tie-bar-load receiving sections 16 is not transmitted to the mold-mounting portion 14. Side walls 36 extending toward the mold-mounting portion 12 are formed on the upper and lower horizontal outer peripheral edges of the rear surface portion 14 at positions corresponding to horizontal openings 32. The side walls 36 are connected to corresponding horizontal side edge connection members 34 and adjacent tie-bar-load-receiving sections 16. At the upper and lower horizontal outer peripheral edges of the rear surface portion 14, the side walls 36 serve as ribs, so that the strength of the rear surface portion is increased, and it becomes difficult to deform.

The cavity portion 25 has side openings 31, which are formed in opposite end portions of the vertical side surfaces of the stationary platen 11 to communicate with the outside, and the horizontal openings 32, which are formed in opposite end portions of the horizontal side walls of the stationary platen 11 to communicate with the outside. As a result of formation of the side openings 31, vertical side edge connection members 33 are formed to the vertical side surfaces of the stationary platen 11, and as a result of formation of the horizontal openings 32, the horizontal side edge connection members 34 are formed in the horizontal side walls of the stationary platen 11. These side edge connection members constitute an outer peripheral side edge connection member. Notably, the above-described side walls 36 may be attached to the left and right vertical outer peripheral edges of the rear surface portion 14 at positions corresponding to the side openings 31. Further, the number and shape of the vertical side edge connection members 33 and the horizontal side edge connection members 34 can be optimally set by changing the seize, shape, and number of the side openings 31 and the horizontal openings 32 in accordance with the side of a mold, workability of the platen, and the strengths and deformation amounts of the mold-mounting portion 12 and the rear surface portion 14.

Moreover, the upper and lower ends of left and right vertical outer peripheral edges of the mold-mounting portion 12 are connected to the upper and lower ends of left and right vertical outer peripheral edges of the rear surface portion 14 via outer peripheral edge auxiliary connection members 35. The size and shape of the outer peripheral edge auxiliary connection members 35 may be freely changed in accordance with the strengths, deformation amounts, etc., of the mold-mounting portion 12 and the rear surface portion 14. Alternatively, the outer peripheral edge auxiliary connection members 35 may be omitted. Moreover, depending on the strengths, deformation amounts, etc., of the mold-mounting portion 12 and the rear surface portion 14, the outer peripheral edge auxiliary connection members 35 may be disposed at the left and right end portions of the upper and lower horizontal outer peripheral edges of the mold-mounting portion 12 and the rear surface portion 14 so as to connect the mold-mounting portion 12 and the rear surface portion 14.

As described above, the mold-mounting portion 12 is connected to the rear surface portion 14 at respective central portions of the outer peripheral edge of the four sides. Therefore, even when the size of the stationary mold 41 is large and the outer peripheral portion of the mold-mounting portion 12 or its vicinity; i.e., a portion outside the central region, receives a mold-clamping force, the portion outside the central region does not deform. Further, since the mold-mounting portion 12 is separated from the tie-bar-load-receiving sections 16, even when portions of the rear surface portion 14 in the vicinity of the tie-bar-load-receiving sections 16 deform due to a reaction force that the tie-bar-load-receiving sections 16 receive from the tie bars 42, that deformation is not transmitted to the mold-mounting portion 12, so that the mold-mounting portion 12 does not deform. Accordingly, the surface pressure between the mold-mounting surface 13 and the contact surface of the stationary mold 41 does not become non-uniform.

Moreover, the tie-bar-load-receiving sections 16 are connected to the adjacent side walls 36 and the outer peripheral edge auxiliary connection members 35. Therefore, even when the tie-bar-load-receiving sections 16 deform due to the reaction received from the tie bars 42 and the tie bars 42 bend, the adjacent side walls 36 and the outer peripheral edge auxiliary connection members 35 prevent the tie bars 42 from bending excessively, to thereby prevent breakage of the tie bars 42. That is, the above-described structure improves overall rigidity while improving the molding performance associated with the molds.

Since the stationary platen 11 is produced through casting, the mold-mounting portion 12, the rear surface portion 14, the tie-bar-load-receiving sections 16, the mounting portions 18, the mounting leg members 18a, the connection plate 19, the central connection member 22, the vertical side edge connection members 33, the horizontal side edge connection members 34, the outer peripheral edge auxiliary connection members 35, and the side walls 36 are integrally formed as a single member. Notably, as shown in FIGS. 5 and 6, a plurality of (e.g., four) rear-surface through holes 28 are formed in the rear surface portion 14. Support members 56 for supporting a core 55 to be described later, which is used for forming the cavity portion 25 at the time of casting, are inserted into the rear-surface through holes 28. As shown in FIGS. 7, 8, 10, and 11, the rear-surface through holes 28 communicate with the cavity portion 25.

That is, the mold-supporting apparatus of the present embodiment is configured to include the central connection member 22 which is disposed inside the mold-supporting apparatus and surrounded by the cavity portion 25 extending along the advancement-retreat direction of the movable mold, and the through holes 31 and 32 formed in the surfaces adjacent to the mold-mounting surface 13 and communicating with the cavity portion 25.

Next, operation of the stationary platen 11 having the above-described structure will be described.

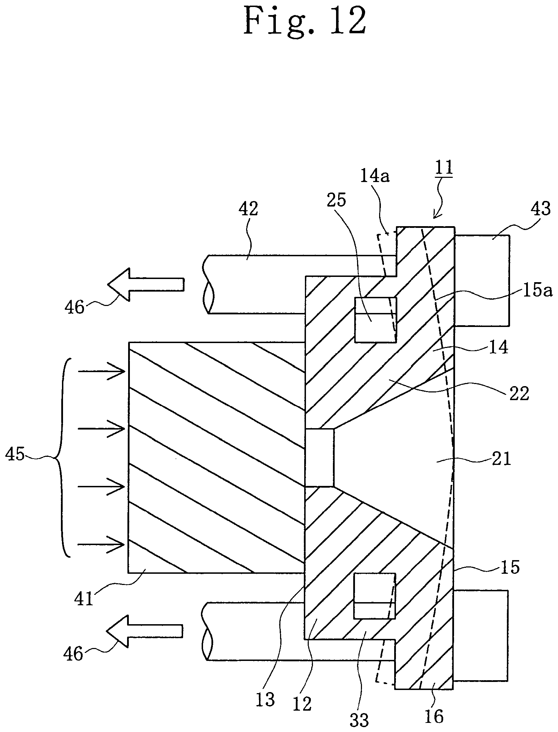

FIG. 12 is a side sectional view of the stationary platen according to the embodiment of the present invention, showing a state in which the stationary platen is mounted to a molding machine.

First, when the servomotor (drive section) of the mold-clamping apparatus of the injection molding machine is operated, the rotational motion of the servomotor is converted to linear motion by means of a ball screw (motion direction conversion mechanism), and the linear motion is transmitted to the unillustrated movable platen via the toggle mechanism. As a result, the movable platen is moved toward the stationary platen 11, whereby an unillustrated movable mold mounted to the movable platen is pressed against the stationary mold 41 mounted to the mold-mounting surface 13 of the stationary platen 11, and thus mold closing and mold clamping are performed. Notably, the plurality of (e.g., four) tie bars 42 disposed to extend between the stationary platen 11 and the unillustrated toggle support are inserted into the tie bar insertion holes 17 as shown in FIGS. 1 and 3, and the end portions of the tie bars 42 are fixed to the tie-bar-load-receiving sections 16 of the stationary platen 11, from the rear face 15 side, by means of fixing members 43 such as nuts.

Subsequently, resin is injected under high pressure from an unillustrated injection apparatus, and is charged into the cavity between the movable mold and the stationary mold 41. The resin is then cooled and solidified so as to obtain a molded product. The drive section of the mold-clamping apparatus operates so as to retreat the movable platen, so that the movable mold is separated from the stationary mold 41, and thus mold opening is performed. Subsequently, an unillustrated ejector rod is advanced, whereby an ejector pin projects into the cavity within the movable mold to thereby eject the molded product. Thus, the molded product is removed. A large number of molded products are produced through repetition of the above-described operation.

During the mold closing and mold clamping, as shown in FIG. 12, the stationary mold 41 receives a strong mold-clamping force 45 from the toggle mechanism via the movable platen and the movable mold. The mold-clamping force 45 is then transferred to the stationary platen 11. The tie-bar-load-receiving sections 16 of the stationary platen 11 receive, via the tie bars 42, a reaction force 46 which is opposite in direction and equal in magnitude to the mold-clamping force 45. Therefore, upon receipt of the strong mold-clamping force 45 from the toggle mechanism, the tie-bar-load-receiving sections 16 receive the strong reaction force 46 from the tie bars 42, and a bending moment acts on the rear surface portion 14. As a result, the rear surface portion 14 deflects and deforms as indicated by 14a. In this case, since the central connection member 22 is connected to the central region of the rear surface portion 14 and the strength of the central region is increased, the rear surface portion 14 hardly deforms in the central region. Therefore, the rear surface portion 14 deforms mainly in a region outside the central region. As a result, the rear surface 15 deforms mainly in a region outside the central region as indicated by 15a. Notably, for facilitating understanding, the deformed rear surface portion 14a and the deformed rear surface 15a of the stationary platen 11 are shown in an exaggerated manner in FIG. 12.

However, since the central region of the mold-mounting portion 12 is connected to the central region of the rear surface portion 14 by means of the central connection member 22, and a portion of the mold-mounting portion 12 outside the central region is separated from the rear surface portion 14 by means of the cavity portion 25. Therefore, even when the tie-bar-load-receiving sections 16 deform, the deformation is not transmitted to the mold-mounting portion 12, so that the mold-mounting portion 12 does not deform. Since the mold-mounting portion 12 and the mold-mounting surface 13 thereof do not deform and the surface pressure between the mold-mounting surface 13 and the contact surface of the stationary mold 41 is uniform, the stationary mold 41 does not deform. Accordingly, burrs are not produced on molded products, and wall thicknesses of molded products do not become uneven, whereby the quality of molded products can be improved.

The central connection member 22 is connected to the mold-mounting portion 12 in the central region thereof, and the central region has increased strength. Therefore, even when the mold-mounting portion 12 receives a strong mold-clamping force 45, the mold-mounting portion 12 hardly deforms in the central region. Further, the mold-mounting portion 12 is connected, at central portions of the outer peripheral edges of the four sides, to central portions of the outer peripheral edges of the four sides of the rear surface portion 14 via the vertical side edge connection members 33 and the horizontal side edge connection members 34. Therefore, even when a portion of the mold-mounting portion 12 outside the central region receives the mold-clamping force 45 because of a large size of the stationary mold 41, the portion outside the central region does not deform. Accordingly, the mold-mounting portion 12 and the mold-mounting surface 13 thereof do not deform even outside the center region, so that the surface pressure between the mold-mounting surface 13 and the contact surface of the stationary mold 41 does not become non-uniform, and the stationary mold 41 does not deform.

Notably, the central portions of the outer peripheral edges of the four sides of the mold-mounting portion 12 and the central portions of the outer peripheral edges of the four sides of the rear surface portion 14, which are connected by means of the vertical side edge connection members 33 and the horizontal side edge connection members 34, are separated from the tie-bar-load-receiving sections 16. Therefore, even when portions of the rear surface portion 14 in the vicinity of the tie-bar-load-receiving sections 16 deform due to a reaction force 46 that the tie-bar-load-receiving sections 16 receive from the tie bars 42, that deformation is not transmitted to the mold-mounting portion 12, so that the mold-mounting portion 12 does not deform.

Moreover, since the side walls 36 and the outer peripheral edge auxiliary connection members 35 are attached to the outer peripheral edge of the rear surface portion 14, the strength of a portion of the rear surface portion 14; in particular, that outside the central region, increases, and that portion becomes difficult to deform. Therefore, even when the weight of the stationary platen 11 decreases because of the presence of the cavity portion 25, the strength of the stationary platen 11 does not decrease.

Next, a casting mold for manufacturing the stationary platen 11 having the above-described structure by means of casting will be described.

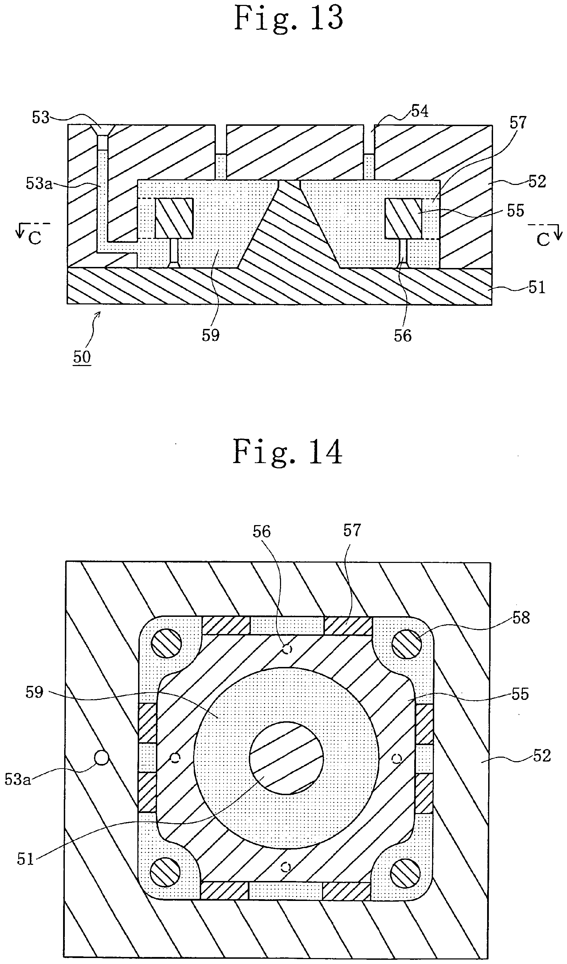

FIG. 13 is a vertical sectional view of a casting mold for casting the stationary platen according to the embodiment of the present invention. FIG. 14 is a transverse sectional view of the casting mold for casting the stationary platen according to the embodiment of the present invention, taken along line C-C in FIG. 13.

In the present embodiment, the stationary platen 11 is manufactured (cast) by use of a casting mold 50 as shown in FIGS. 13 and 14. As shown in FIG. 13, the casting mold 50 includes a lower mold 51 and an upper mold 52, and melt (molten metal material) 59 is charged into the space between the lower mold 51 and the upper mold 52. The melt 59 is of cast steel, for example. In this case, the melt 59, which is poured into a pouring gate 53 formed in the upper mold 52, flows into the space via a melt passage 53a. Notably, reference numeral 54 denotes riser holes for risers which are formed in the upper mold 52. The number and positions of the riser holes may be determined freely.

The core 55 for forming the cavity portion 25 is disposed in the space. Since the core 55 is supported from the lower side by means of a plurality of (e.g., four) support members 56, the core 55 is separated from the upper surface of the lower mold 51 and is disposed in the space in a suspended condition. The support members 56 form the rear-surface through holes 28 of the rear surface portion 14. Further, as shown in FIG. 14, the core 55 is laterally supported by means of a plurality of (e.g., two for each side surface) .side-surface support members 57. Therefore, the core 55 is disposed while being separated from the inner side surface of the upper mold 52. Notably, the side-surface support members 57 form the side openings 31 and the horizontal openings 32. Moreover, as shown in FIG. 14, insertion-hole cores 58 are disposed at the four corners of the space so as to form the tie bar insertion holes 17 of the tie-bar-load-receiving sections 16.

As described above, since the casting mold 50 has a simple structure, the stationary platen 11 can be readily cast, and the production cost of the stationary platen 11 can be lowered. In addition, the core 55 for forming the cavity portion 25 is supported by means of the support members 56 and the side-surface support members 57; and the rear-surface through holes 28, the side openings 31, and the horizontal openings 32 are formed by means of the support members 56 and the side-surface support members 57. Therefore, after completion of casting, the core 55 can be readily removed from the rear-surface through holes 28, the side openings 31, and the horizontal openings 32.

As described above, in the present embodiment, the stationary platen 11 has the mold-mounting portion 12 and the rear surface portion 14; the mold-mounting portion 12 and the rear surface portion 14 are connected, in their central regions, to each other by means of the central connection member 22; and they are separated from each other by means of the cavity portion 25 in regions outside the central regions. In addition, the central portions of the outer peripheral edges of the four sides of the mold-mounting portion 12 and the central portions of the outer peripheral edges of the four sides of the rear surface portion 14 are connected to each other by means of outer peripheral edge connection members.

Therefore, in spite of the simple structure, the mold-mounting portion 12 and the mold-mounting surface 13 thereof do not deform because of the mold-clamping force 45 or its reaction force 46, irrespective of the size of the stationary mold 41. Accordingly, the stationary mold 41 does not deform, so that the surface pressure between the mold-mounting surface 13 and the contact surface of the stationary mold 41 does not become non-uniform. Further, burrs are not produced on molded products, and wall thicknesses of molded products do not become uneven, so that the moldability of molded products does not deteriorate.

Further, the side walls 36 and the circumferential edge auxiliary connection members 35 are formed at the outer peripheral edge of the rear surface portion 14 by means of the support plates of the core 55 for forming the cavity portion 25. Therefore, the strength of the rear surface portion 14 increases, and it becomes difficult to deform.

Moreover, since the stationary platen 11 can be manufactured by use of the casting mold 50 having a simple structure, the stationary platen 11 can be easily produced, and the production cost can be reduced. In this case, after completion of casting, the core 55 for forming the cavity portion 25 can be readily removed from the rear-surface through holes 28, the side openings 31, and the horizontal openings 32. Whereas one surface of the stationary platen 11 to which a mold is mounted is required to have a high surface accuracy because of attachment of the mold, the other surface (rear surface portion 14) is required to have a relatively low surface accuracy. Therefore, formation of the cavity portion 25 can be readily performed by means of providing the support plates of the core 55 in the rear surface portion 14.

In the above-described embodiment, a horizontal-type injection molding machine in which the movable platen moves laterally (horizontally) has been described. However, the present invention can be applied to a vertical-type injection molding machine in which the movable platen moves upward and downward (vertically). Further, the present invention can be applied not only to injection molding machines, but also to other forming machines such as die cast machines and IJ sealing presses.

The present invention is not limited to the above-described embodiments. Numerous modifications and variations of the present invention are possible within the scope of the present invention as defined by the appended claims. INDUSTRIAL APPLICABILITY

The present invention can be applied to molding machines, and molding methods.

## Claims

1. A molding machine including a mold-supporting apparatus (11) and a reaction force applying member (42), the mold-supporting apparatus (11) comprising:
a mold-mounting portion (12) having a mold-mounting surface (13) to which a mold (41) is mounted; and
a rear surface portion (14) having a rear surface (15) opposite the mold-mountig surface (13) and having reaction-force-receiving portions (16, 16a, 16b) at corners thereof, the reaction-force-receiving portions (16, 16a, 16b) receiving reaction force (46) from said reaction force applying member (42),
whereby
the reaction force applying member (42) is fixed to the reaction-force-receiving portions (16, 16a, 16b) of the mold-support apparatus (11);
a central region of the mold-mounting portion (12) and a central region of the rear surface portion (14) are connected together by means of a central connection member (22), and
an outer peripheral portion of the mold-mounting portion (12) and an outer peripheral portion of the rear surface portion (14) are connected together by means of an outer peripheral portion connection member (33-36),
**characterized in that**
a continuous annular cavity portion (25) is formed between the mold-mounting portion (12) and the rear surface portion (14) to surround the central connection member (22), wherein the central connection member (22) assumes a generally cylindrical columnar shape.

2. A molding machine according to claim 1, wherein the central connection member (22) has a straight or symmetric outer peripheral shape with respect to the axial direction thereof.

3. A molding machine according to claim 1 or 2, wherein the central connection member (22) comprises a single member connecting a central portion of the mold-mounting portion (12) and a central portion of the rear surface portion (14).

4. A molding machine according to any one of claims 1 to 3, wherein the outer peripheral portion connection member (33-36) connects the mold-mounting portion (12) and the rear surface portion (14) along their outer peripheral portions of four sides or two sides.

5. A molding machine according to any one of claims 1 to 4, wherein a step is present between a mold-mounting-side surface of the reaction-force-receiving portion (16, 16a, 16b) and the mold-mounting surface (13) of the mold-mounting portion (12).

6. A molding machine according to any one of claims 1 to 5, wherein the rear surface portion (14) includes a mounting portion (18, 18a) which is secured to a frame of said molding machine for supporting a mold-clamping apparatus of said molding machine.

7. A molding method of producing a molded product by use of a molding machine according to any one of claims 1 to 6.

## Patentansprüche

1. Spritzguss- bzw. Formmaschine, die eine Formstützvorrichtung (11) und ein Reaktionskraftanwendungsglied (42) aufweist, wobei die Formstützvorrichtung (11) Folgendes aufweist:
einen Formanbringungsteil (12) mit einer Formanbringungsfläche (13), an der eine Form (41) angebracht ist; und
einen Rückflächenteil (14) mit einer Rückfläche (15) gegenüberliegend der Formanbringungsfläche (13) und mit Reaktionskraftaufnahmeteilen (16, 16a, 16b) an seinen Ecken, wobei die Reaktionskraftaufnahmeteile (16, 16a, 16b) Reaktionskräfte (46) von dem Reaktionskraftanwendungsglied (42) aufnehmen,
wobei
das Reaktionskraftaufnahmeglied (42) an den Reaktionskraftaufnahmeteilen (16, 16a, 16b) der Formstützvorrichtung (11) befestigt ist;
ein zentraler Bereich des Formanbringungsteils (12) und ein zentraler Bereich des Rückflächenteils (14) zusammen mittels eines zentralen Verbindungsglieds (22) verbunden sind, und
ein Außenumfangsteil des Formanbringungsteils (12) und ein Außenumfangsteil des Rückflächenteils (14) zusammen mittels eines Außenumfangsteilverbindungsglied (33-36) verbunden sind,
**dadurch gekennzeichnet, dass**
ein kontinuierlicher, ringförmiger Hohlraumsteil (25) so zwischen dem Formanbringungsteil (12) und dem Rückflächenteil (14) gebildet ist, dass er das zentrale Verbindungsglied (22) umgibt, wobei das zentrale Verbindungsglied (22) eine im Allgemeinen zylindrische Säulenform annimmt.

2. Formmaschine gemäß Anspruch 1, wobei das zentrale Verbindungsglied (22) eine gerade oder symmetrische Außenumfangsform bezüglich der axialen Richtung von diesem aufweist.

3. Formmaschine gemäß Anspruch 1 oder 2, wobei das zentrale Verbindungsglied (22) ein einzelnes Glied aufweist, das einen zentralen Teil des Formanbringungsteils (12) und einen zentralen Teil des Rückflächenteils (14) verbindet.

4. Formmaschine gemäß einem der Ansprüche 1 bis 3, wobei das Außenumfangsteilverbindungsglied (33-36) den Formanbringungsteil (12) und den Rückflächenteil (14) entlang ihrer Außenumfangsteile von vier Seiten oder zwei Seiten verbindet.

5. Formmaschine gemäß einem der Ansprüche 1 bis 4, wobei eine Abstufung zwischen einer Oberfläche der Formanbringungsseite des Reaktionskraftaufnahmeteils (16, 16a, 16b) und der Formanbringungsoberfläche (13) des Formanbringungsteils (12) vorhanden ist.

6. Formmaschine gemäß einem der Ansprüche 1 bis 5, wobei der Rückflächenteil (14) einen Anbringungsteil (18, 18a) aufweist, der an einem Rahmen der Formmaschine befestigt ist, um eine Formschließ- bzw. Formklemmvorrichtung der Formmaschine zu tragen bzw. zu stützen.

7. Spritzguss- bzw. Formverfahren zum Herstellen eines Formprodukts durch Verwendung einer Formmaschine gemäß einem der Ansprüche 1 bis 6.

## Revendications

1. Machine de moulage comprenant un dispositif support de moule (11) et un élément d'application de force de réaction (42), le dispositif support de moule (11) comprenant :
une portion de montage de moule (12) comportant une surface de montage de moule (13) sur laquelle un moule (41) est monté ; et
une portion de surface arrière (14) comportant une surface arrière (15) opposée à la surface de montage de moule (13) et comportant des portions de réception de force de réaction (16, 16a, 16b) au niveau de ses coins, les portions de réception de force de réaction (16, 16a, 16b) recevant une force de réaction (46) provenant de l'élément d'application de force de réaction (42),
danslaquelle l'élément d'application de force de réaction (42) est fixé aux portions de réception de force de réaction (16, 16a, 16b) du dispositif support de moule (11) ;
une région centrale de la portion de montage de moule (12) et une région centrale de la portion de surface arrière (14) sont connectées entre elles au moyen d'un élément de connexion central (22), et
une portion périphérique extérieure de la portion de montage de moule (12) et une portion périphérique extérieure de la portion de surface arrière (14) sont connectés entre elles au moyen d'un élément de connexion de portion périphérique extérieure (33-36),
**caractérisée en ce qu'**une portion de cavité annulaire continue (25) est formée entre la portion de montage de moule (12) et la portion de surface arrière (14') pour entourer l'élément de connexion central (22), l'élément de connexion central (22) ayant une forme de colonne généralement cylindrique.

2. Machine de moulage selon la revendication 1, dans laquelle l'élément de connexion central (22) a une forme périphérique extérieure droite ou symétrique par rapport à sa direction axiale.

3. Machine de moulage selon la revendication 1 ou 2, dans laquelle l'élément de connexion central (22) comprend un seul élément connectant une portion centrale de la portion de montage de moule (12) et une portion centrale de la portion de surface arrière (14).

4. Machine de moulage selon l'une quelconque des revendications 1 à 3, dans laquelle l'élément de connexion de portion périphérique extérieure (33-36) connecte la portion de montage de moule (12) et la portion de surface arrière (14) le long de leurs portions périphériques extérieures de quatre côtés oudeux côtés.

5. Machine de moulage selon l'une quelconque des revendications 1 à 4, dans laquelle une marche est présente entre une surface de côté de montage de moule de la portion de réception de force de réaction (16, 16a, 16b) et la surface de montage de moule (13) de la portion de montage de moule (12).

6. Machine de moulage selon l'une quelconque des revendications 1 à 5, dans laquelle la portion de surface arrière (14) comprend une portion de montage (18, 18a) qui est fixée à un châssis de la machine de moulage pour supporter un dispositif de serrage de moule de la machine de moulage.

7. Procédé de moulage pour produire un produit moulé en utilisant une machine de moulage selon l'une quelconque des revendications 1 à 6.
